# FASCICULE DE BREVET EUROPEEN

(11) **EP 1 098 143 B1**
(45) Date de publication et mention de la délivrance du brevet: **13.08.2003**
(21) Numéro de dépôt: 00403046.6
(22) Date de dépôt: 02.11.2000
(51) Int. Cl.: F24D 3/16

(54) **Dispositif de chauffage par le plafond**
Deckenheizung
Heating ceiling

(30) Priorité: 08.11.1999 FR 9914001
(43) Date de publication de la demande: 09.05.2001
(73) Titulaire: Sainsily, Pierre-Edouard, 33000 Bordeaux (FR)
(72) Inventeur: Sainsily, Pierre-Edouard, 33000 Bordeaux (FR)
(74) Mandataire: de Roquemaurel, Bruno

(56) Documents cités:
- EP-A- 0 511 645
- DE-C- 974 794
- DE-U- 8 400 402
- GB-A- 778 805
- US-A- 3 741 478

## Description

La présente invention se situe dans le domaine de chauffage de locaux domestiques, tertiaires ou industriels. Elle concerne particulièrement un dispositif de chauffage comportant au moins un conduit destiné à former un circuit de circulation d'un fluide caloporteur.

Le brevet US-4 164 933 décrit un chauffage par le plafond dans lequel des plaques de béton armé précontraint sont destinées à collecter la chaleur solaire et à transférer cette chaleur par un liquide circulant dans un conduit creusé dans la structure desdites plaques en béton.

Un inconvénient majeur de ce type de structure résulte du fait que le béton armé subit des contraintes très importantes de dilatation différentielle, dues à la présence d'une armature en acier, ce qui entraîne la formation de fissures. En outre, cette structure ne peut pas s'adapter à des locaux préexistants. En effet, les plaques en béton dans lesquelles sont intégrés les conduits constituent les parois du local à chauffer, de ce fait l'installation du chauffage doit être faite lors de la construction du local à chauffer.

Le brevet GB 778 805 décrit un dispositif de chauffage par le plafond selon le préambule de la revendication 1 comportant un circuit de fluide caloporteur en serpentin placé à distance d'une plaque inférieure, et des éléments isolants en aluminium placés contre le circuit.

Le but de l'invention est de pallier les inconvénients des installations de chauffage de l'art antérieur au moyen d'un dispositif simple et peu coûteux adaptable à tout type de locaux domestiques ou industriels.

Un autre but de l'invention est de réaliser un dispositif de chauffage permettant d'obtenir une diffusion optimale de la chaleur à partir du plafond.

A cet effet, dans le dispositif de chauffage selon l'invention, ledit circuit est disposé dans un boîtier fixé au plafond du local à chauffer, et comprend un réflecteur agencé au-dessus des conduits de circulation du fluide caloporteur et une plaque inférieure en matériau résistant à la température et à faible coefficient de dilatation, agencée en dessous du circuit de fluide caloporteur, le circuit de fluide caloporteur comprenant une pluralité de conduits concentriques, situés à distance du réflecteur et de la plaque inférieure, et reliés chacun à un collecteur d'arrivée et un collecteur de sortie.

Grâce au dispositif selon l'invention, la chaleur est rayonnée vers l'intérieur du local à chauffer.

En outre, en positionnant le boîtier au plafond du local à chauffer, on supprime l'encombrement dû aux radiateurs muraux tout en assurant un chauffage uniforme.

Le collecteur d'arrivée et le collecteur de sortie sont avantageusement disposés à proximité l'un de l'autre.

Selon une particularité de l'invention, un matériau thermiquement isolant est agencé entre le réflecteur et le plafond.

Selon une autre particularité de l'invention, le circuit de fluide caloporteur comprend plusieurs ensembles concentriques de conduits concentriques, chaque ensemble étant associé à un collecteur d'arrivée et à un collecteur de sortie.

De préférence, les conduits sont agencés selon des rectangles concentriques. Ils peuvent présenter une section droite sensiblement rectangulaire.

La plaque inférieure est par exemple constituée par une plaque d'éternit cellulose.

D'autres caractéristiques et avantages de l'invention ressortiront mieux de la description qui va suivre, prise à titre d'exemples non limitatifs, en référence aux figures annexées dans lesquelles :
- La figure 1 représente une vue en coupe verticale d'un plafond sur lequel est installé un dispositif de chauffage conforme à un premier mode de réalisation de l'invention ;
- la figure 2 représente une vue de dessous du circuit de fluide caloporteur illustré sur la figue 1 ;
- la figure 3 représente schématiquement une vue en coupe verticale d'un plafond sur lequel est installé un dispositif de chauffage conforme à un deuxième mode de réalisation de l'invention ;
- la figure 4 représente une vue de dessus du réflecteur représenté sur la figure 1 ;
- la figure 5 représente schématiquement une vue de côté partielle d'une maison équipée d'un dispositif de chauffage illustré par la figure 3.
- la figure 6 représente une vue agrandie du dispositif de fixation du dispositif de chauffage illustré par la figue 3 ou 5.

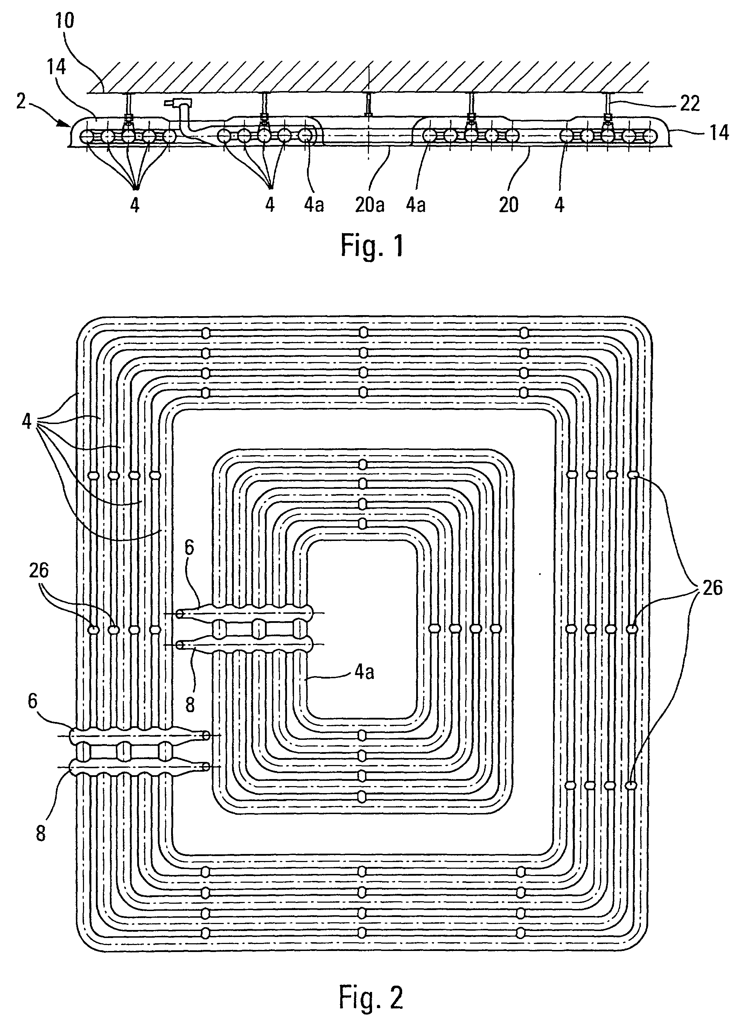

En référence aux figures 1, 2 et 4, le dispositif de chauffage par le plafond selon l'invention comporte un boîtier 2 dans lequel sont agencés de façon concentrique et dans un même plan parallèle au plafond, une pluralité de conduits 4 destinés à constituer un circuit pour la circulation d'un fluide caloporteur. Chaque conduit 4 est relié d'une part à un collecteur d'arrivée 6 par lequel le fluide caloporteur est introduit simultanément dans les conduits 4, et d'autre part à un collecteur de sortie 8 du fluide caloporteur par lequel le fluide caloporteur, refroidi du fait de son passage dans les conduits 4, est extrait simultanément des conduits 4. Ces deux collecteurs sont de préférence disposés à proximité l'un de l'autre.

Avantageusement, le dispositif de chauffage comprend dix conduits concentriques regroupés en deux ensembles de cinq conduits, chaque ensemble comportant ses propres collecteurs d'arrivée 6 et de sortie 8. Cette disposition permet d'obtenir une meilleure répartition du débit de fluide caloporteur dans les différents conduits 4.

Ce circuit de circulation de fluide caloporteur est agencé dans un boîtier 2 fermé, fixé au plafond 10 du local à chauffer, ce boîtier comprenant un réflecteur 14 agencé au-dessus et à distance des conduits 4, et une plaque inférieure 20 en un matériau rigide, résistant à la température et à faible coefficient de dilatation, fixée à distance en dessous des conduits 4. La présence de lames d'air tout autour des conduits 4 permet à la chaleur transportée par le fluide caloporteur de se diffuser à l'intérieur du boîtier, à la fois par rayonnement et réflexion sur le réflecteur 14, par conduction entre les conduis et l'air situé tout autour dans le boîtier, et par convection, l'air à l'intérieur du boîtier subissant un mouvement de convection. Il en résulte à la fois une transmission efficace de la chaleur entre le fluide caloporteur et l'air à l'intérieur du boîtier, et une répartition très homogène de la température à l'intérieur du boîtier et donc de la plaque inférieure 20 qui est chauffée à la fois par rayonnement et par contact avec l'air chaud à l'intérieur du boîtier. La plaque 20 transmet à son tour la chaleur qu'elle reçoit à l'air du local à chauffer à la fois par rayonnement et par conduction, ce qui permet d'obtenir une transmission efficace de la chaleur à l'air de la pièce.

L'épaisseur des lames d'air entre les conduits 4 et le réflecteur 14 ou la plaque inférieure 20 est de préférence de l'ordre de 9 mm, ce qui permet d'éviter tout risque de contact des conduits avec la plaque inférieure 20 ou le réflecteur 14, en cas de dilatation des conduits, et ce sans affecter la conduction de la chaleur entre les conduits et la plaque.

Avantageusement, la surface occupée par les conduits 4 représente environ 50% de la surface totale du plafond 10, ce qui permet également d'obtenir une répartition homogène de la température dans la pièce.

Dans un premier mode de réalisation illustré par la figure 1, adapté au chauffage de locaux industriels, le réflecteur 14 est constitué d'une seule pièce enveloppant par le dessus et latéralement le circuit de fluide caloporteur. Avantageusement, le réflecteur 14 comprend une partie centrale 20a abaissée par rapport à la partie située au-dessus des conduits 4 de manière à envelopper latéralement le conduit 4a situé le plus à l'intérieur du circuit.

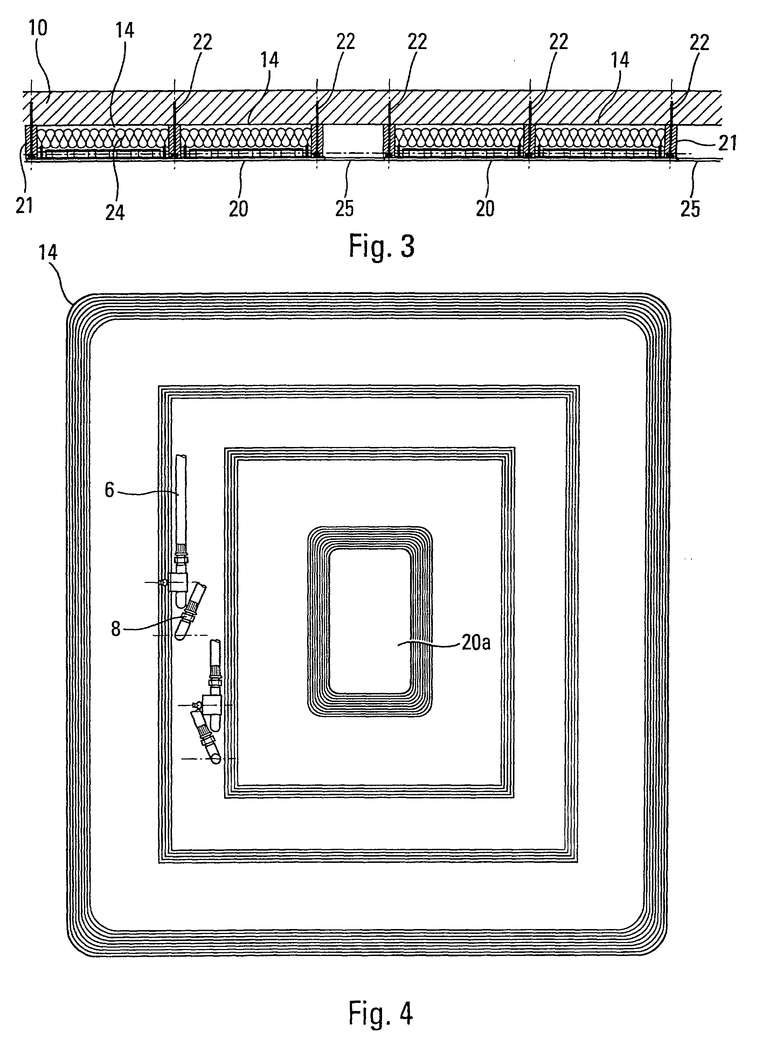

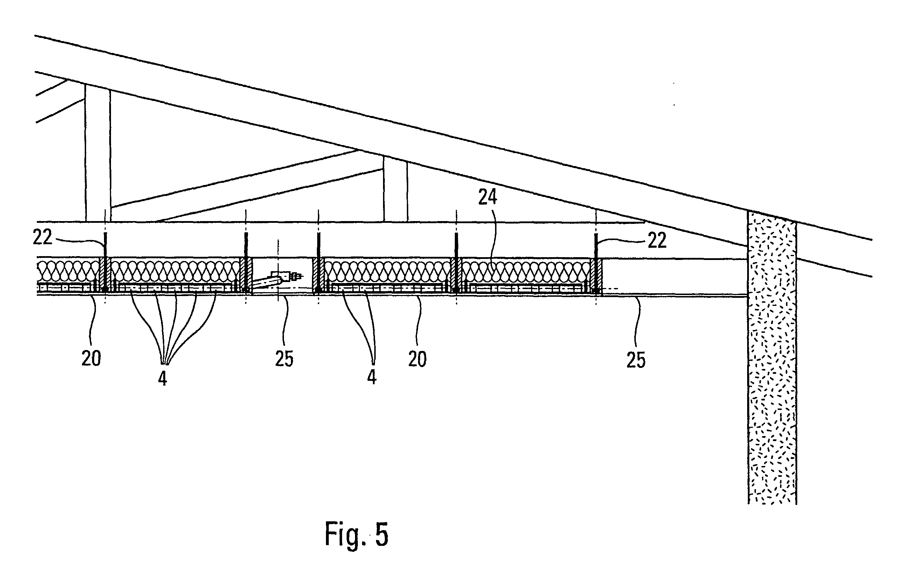

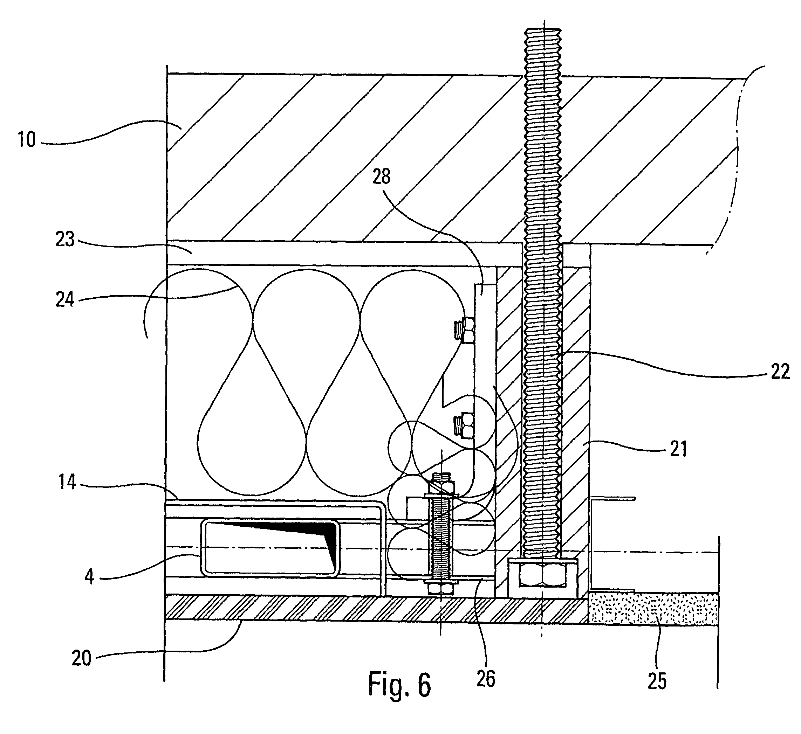

Les figures 3, 5 et 6 illustrent un deuxième mode de réalisation adapté au chauffage de locaux domestiques d'habitation, appartement ou maison individuelle. Dans ce mode de réalisation, le boîtier 2 est complètement fermé par une plaque supérieure 23 plaquée contre le plafond de la pièce à chauffer, une plaque inférieure 20 en un matériau résistant à la température et à faible coefficient de dilatation, et des parois latérales 21. Il renferme un réflecteur supérieur 14 plan muni de rebords latéraux, et un circuit de fluide caloporteur constitué de conduits 4concentriques. Le boîtier est fixé au plafond de la pièce à chauffer par exemple par des vis de fixation 22 passant au travers des parois latérales 21, comme cela est représenté plus en détail sur la figure 6.

Par ailleurs, afin de limiter les déperditions de chaleur vers le haut, un matériau 24 d'isolation thermique est agencé dans le boîtier entre le réflecteur 14 et la plaque 23. Alternativement, en remplacement du réflecteur 14, le matériau 24 peut être muni sur sa face inférieure d'une face réfléchissante, la plaque supérieure 23 sur laquelle est fixé le matériau d'isolation permettant de maintenir celui-ci, et donc sa face réfléchissante, sensiblement horizontal.

Comme on peut le voir sur la figure 2, les conduits 4 décrivent des rectangles concentriques. Bien entendu la forme desdits conduits peut être adaptée à la forme du plafond du local à chauffer de manière à optimiser le rayonnement. Elle peut par exemple être circulaire. Les conduits 4 sont fixés par des entretoises 26 sur les parois latérales 21 par des équerres 28 (voir figure 6). La section droite des conduits est de préférence sensiblement rectangulaire, de manière à limiter l'épaisseur du dispositif de chauffage sans réduire le débit de fluide caloporteur dans les conduits 4.

La surface du faux plafond, constituée à 50 % par la plaque inférieure 20, peut être complétée par des plaques 25 telles que des plaques de placoplâtre.

De préférence, le fluide caloporteur est constitué par de l'huile minérale ou de synthèse. Par rapport à l'eau, plus couramment utilisée comme fluide caloporteur, l'huile présente l'avantage de chauffer trois fois moins vite, mais en contrepartie de refroidir trois moins vite (transmission de la chaleur au milieu ambiant plus rapide), de pouvoir être portée à des températures beaucoup plus élevées, et de ne pas attaquer par corrosion les conduits dans lesquels elle circule. En outre, l'huile ne gèle et donc ne risque pas de faire éclater les conduits 4 en cas d'arrêt du dispositif de chauffage pendant l'hiver.

La plaque inférieure 20 destinée à fermer le boîtier 2 est constituée par exemple d'une plaque d'éternit cellulose ou de kaolin, et le matériau 22 d'isolation thermique est constitué par de la laine de verre ou de roche.

La température de la pièce peut être réglée par une simple commande du débit de fluide caloporteur dans le circuit, par exemple au moyen d'une vanne (non représentée) à débit variable, disposée en amont du collecteur d'arrivée 6.

Le dispositif de chauffage selon l'invention permet de :
- homogénéiser la température dans le local à chauffer ;
- gérer automatiquement la température pièce par pièce ;
- supprimer les traces disgracieuses autour des corps de chauffe, générées par la carbonisation des poussières ;
- libérer l'espace dans les pièces et faciliter leur aménagement par l'élimination de tout corps de chauffe apparent ;
- s'adapter à la hauteur des pièces en cas d'installation dans une maison existante ;
- remplacer les épingles à gaz et les poêles à mazout dans les locaux industriels.

## Revendications

1. Dispositif de chauffage par le plafond comportant au moins un conduit destiné à former un circuit de circulation d'un fluide caloporteur, ledit circuit étant disposé dans un boîtier (2) fixé au plafond du local à chauffer, ledit boîtier (2) comportant un réflecteur (14) agencé au-dessus des conduits (4) de circulation du fluide caloporteur et une plaque inférieure (20) en matériau résistant à la température, agencée en dessous et à distance des conduits, **caractérisé en ce que** le circuit comprend une pluralité de conduits (4) concentriques reliés chacun à un collecteur d'arrivée (6) et un collecteur de sortie (8) et est situé à distance du réflecteur.

2. Dispositif selon la revendication 1, **caractérisé en ce que** le collecteur d'arrivée (6) et le collecteur de sortie (8) sont disposés à proximité l'un de l'autre.

3. Dispositif selon la revendication 1 ou 2, **caractérisé en ce qu'**il comprend plusieurs ensembles concentriques de conduits concentriques, chaque ensemble étant associé à un collecteur d'arrivée (6) et à un collecteur de sortie (8).

4. Dispositif selon l'une des revendications 1 à 3, **caractérisé en ce que** les conduits (4) sont agencés selon des rectangles concentriques.

5. Dispositif selon l'une des revendications 1 à 4, **caractérisé en ce que** les conduits (4) présentent une section droite sensiblement rectangulaire.

6. Dispositif selon l'une des revendications 1 à 5, **caractérisé en ce qu'**un matériau (24) thermiquement isolant est agencé entre le réflecteur (14) et le plafond (10).

7. Dispositif selon l'une des revendications 1 à 6, **caractérisé en ce que** la plaque inférieure (20) est constituée par une plaque d'éternit cellulose.

8. Dispositif selon l'une des revendications 1 à 7, **caractérisé en ce que** le fluide caloporteur est de l'huile minérale ou de synthèse.

9. Dispositif selon l'une des revendications 1 à 8, **caractérisé en ce que** la surface occupée par les conduits (4) représente environ 50% de la surface totale du plafond (10).

## Patentansprüche

1. Heizvorrichtung für eine Decke mit wenigstens einer Leitung, die einen Zirkulationskreislauf eines flüssigen Wärmeübertragungsmittels bildet, wobei der Kreislauf in einem Gehäuse (2) angeordnet ist, das an der Decke des zu heizenden Raumes befestigt ist, wobei das Gehäuse (2) aufweist einen Reflektor (14), der oberhalb der Zirkulationsleitungen (4) des flüssigen Wärmeübertragungsmittels angeordnet ist, und eine Unterplatte (20) aus einem temperaturresistenten Material, das unterhalb der und in einem Abstand von den Leitungen angeordnet ist, **dadurch gekennzeichnet, daß** der Kreislauf eine Mehrzahl von konzentrischen Leitungen (4) umfaßt, die jeweils mit einem Eingangskollektor (6) und einem Ausgangskollektor (8) verbunden sind, und in einem Abstand von dem Reflektor angeordnet ist.

2. Vorrichtung nach Anspruch 1, **dadurch gekennzeichnet, daß** der Eingangskollektor (6) und der Ausgangskollektor (8) nahe zueinander angeordnet sind.

3. Vorrichtung nach Anspruch 1 oder 2, **dadurch gekennzeichnet, daß** diese mehrere konzentrische Einheiten von konzentrischen Leitungen umfaßt, wobei jede Einheit einem Eingangskollektor (6) und einem Ausgangskollektor (8) zugeordnet ist.

4. Vorrichtung nach einem der Ansprüche 1 bis3, **dadurch gekennzeichnet, daß** die Leitungen (4) in konzentrischen Rechtecken angeordnet sind.

5. Vorrichtung nach einem der Ansprüche 1 bis 4, **dadurch gekennzeichnet, daß** die Leitungen (4) einen im wesentlichen rechtwinkligen Querschnitt aufweisen.

6. Vorrichtung nach einem der Ansprüche 1 bis 5, **dadurch gekennzeichnet, daß** ein wärmeisolierendes Material (24) zwischen dem Reflektor (14) und der Decke (10) angeordnet ist.

7. Vorrichtung nach einem der Ansprüche 1 bis 6, **dadurch gekennzeichnet, daß** die Unterplatte (20) durch eine Platte aus Eternitzellulose gebildet wird.

8. Vorrichtung nach einem der Ansprüche 1 bis 7, **dadurch gekennzeichnet, daß** das flüssige Wärmeübertragungsmittel ein mineralisches oder synthetisches Öl ist.

9. Vorrichtung nach einem der Ansprüche 1 bis 8, **dadurch gekennzeichnet, daß** die von den Leitungen (4) belegte Oberfläche etwa 50% der gesamten Oberfläche der Decke (10) ausmacht.

## Claims

1. Device for heating through the ceiling, comprising at least one conduit intended to form a heat transfer fluid circulation circuit, the said circuit being disposed in a housing (2) fixed to the ceiling of the room to be heated, the said housing (2) comprising a reflector (14) arranged above the heat transfer fluid circulation conduits (4) and a bottom sheet (20) made from temperature-resistant material, arranged below and at a distance from the conduits, **characterised in that** the circuit comprises a plurality of concentric conduits (4) each connected to an inlet manifold (6) and an outlet manifold (8) and is situated at a distance from the reflector.

2. Device according to Claim 1, **characterised in that** the inlet manifold (6) and the outlet manifold (8) are disposed close to each other.

3. Device according to Claim 1 or 2, **characterised in that** it comprises several concentric sets of concentric conduits, each set being associated with an inlet manifold (6) and an outlet manifold (8).

4. Device according to one of Claims 1 to 3, **characterised in that** the conduits (4) are arranged in concentric rectangles.

5. Device according to one of Claims 1 to 4, **characterised in that** the conduits (4) have a substantially rectangular cross-section.

6. Device according to one of Claims 1 to 5, **characterised in that** a thermally insulating material (24) is arranged between the reflector (14) and the ceiling (10).

7. Device according to one of Claims 1 to 6, **characterised in that** the bottom sheet (20) consists of a sheet of cellulose Eternit.

8. Device according to one of Claims 1 to 7, **characterised in that** the heat-transfer fluid is mineral or synthetic oil.

9. Device according to one of Claims 1 to 8, **characterised in that** the surface area occupied by the conduits (4) represents approximately 50% of the total surface area of the ceiling (10).
